# FASCICULE DE BREVET EUROPEEN

(11) **EP 1 613 893 B1**
(45) Date de publication et mention de la délivrance du brevet: **09.06.2010**
(21) Numéro de dépôt: 04742427.0
(22) Date de dépôt: 02.04.2004
(51) Int. Cl.: F21S 8/10, B60Q 1/30

(54) **FEU ARRIERE, EN PARTICULIER FEU STOP POUR VEHICULE AUTOMOBILE**
HECKLEUCHTE, INSBESONDERE BREMSLEUCHTE FÜR EIN KRAFTFAHRZEUG
REAR LIGHT, PARTICULARLY A STOP LIGHT FOR A MOTOR VEHICLE

(30) Priorité: 04.04.2003 FR 0304173
(43) Date de publication de la demande: 11.01.2006
(73) Titulaire: CML INNOVATIVE TECHNOLOGIES Société par actions simplifiée, 25021 Besancon Cedex (FR)
(72) Inventeur: ANDERLINI, Daniel, F-25800 Valdahon (FR)
(74) Mandataire: Poupon, Michel
(86) Numéro de dépôt international: PCT/FR2004/000829
(87) Numéro de publication internationale: WO 2004/090415

(56) Documents cités:
- WO-A-02/33449
- WO-A-99/09349
- GB-A- 2 324 364
- US-A- 5 197 792
- US-A- 5 707 130

## Description

La présente invention concerne un feu arrière, en particulier un feu stop pour véhicule automobile.

Elle se rapporte plus particulièrement à la réalisation d'un troisième feu stop surélevé disposé dans la partie médiane arrière d'un véhicule.

Un tel feu stop est généralement constitué d'une multiplicité de diodes à luminescence (LED) montées sur une plaquette à circuits imprimés et disposées derrière un transparent, seul visible de l'extérieur du véhicule.

L'agencement d'une multitude de diodes LED montées en série sur une plaquette à circuits imprimés nécessite une grande dimension de la plaquette. Il s'avère que dans le cas de tels feux stop, la plaquette à circuits imprimés est soumise à une humidité qu'il convient de protéger par recouvrement de la plaquette d'une couche de protection. Ce revêtement ainsi que le nombre important de diodes à luminescence et la taille de la plaquette à circuits imprimés entraînent des coûts non négligeables.

L'un des buts de la présente invention est de proposer de réduire le coût de fabrication d'un tel feu stop en réduisant le nombre de diodes LED tout en conservant une sortie de lumière identique.

L'état de la technique connaît le document D₁ WO 99/09349 concernant un élément de lentille biréflecteur pour feu stop combinant un guide de lumière et une source lumineuse à nombre limité de LED, cependant sa conformation est prévue pour que le faisceau lumineux émis par la source ne soit pas capté intégralement par le guide de lumière, une partie du faisceau ayant un accès direct à la zone à éclairer dont la répartition de l'intensité lumineuse n'est par conséquent pas homogène avec une zone centrale très brillante.

L'état de la technique connaît également le document D₂ WO 02/3349 concernant des constructions à lentilles de Fresnel mais ce document n'apporte pas de solution au problème de répartition de lumière de l'élément biréflecteur du document D₁.

Afin de résoudre ce problème de répartition de l'intensité lumineuse l'invention a pour objet un feu arrière, en particulier un feu stop pour véhicule automobile comportant au moins une source lumineuse primaire constituée d'au moins une diode à luminescence associée à un guide de lumière dont la forme est constituée globalement d'un tronçon rectiligne et comporte une surface d'entrée, une surface de sortie formant un bandeau d'éclairage rectiligne et entre la surface d'entrée et la surface de sortie une surface de renvoi d'angle permettant d'agencer les surfaces d'entrée et de sortie dans des plans parallèles, **caractérisé en ce que** la surface d'entrée du guide de lumière est constituée par l'association de deux lentilles optiques ; respectivement une première lentille dite de réfraction insérée dans un cône d'entrée des rayons de lumière issus de la source de lumière primaire permettant de réorienter ces rayons de lumière en un faisceau parallèle et une seconde lentille dite de réflexion disposée coaxialement dans le même plan que la première lentille permettant de réorienter parallèlement les faisceaux de lumière ne traversant pas la première lentille et ceux réfléchis sur la surface de la première lentille, la surface de renvoi d'angle étant munie de facettes de sortie de lumière.

Suivant quelques dispositions intéressantes de l'invention :
- la surface de sortie de lumière est composée d'une pluralité de facettes de réflexion et les facettes de réflexion sont agencées selon un pas, définissant l'espacement des zones éclairées et ont respectivement une hauteur croissante en fonction de l'éloignement de la facette par rapport à la source de lumière ;
- la surface de renvoi d'angle est constituée d'une lentille de réflexion interne agencée de telle manière à rediriger le faisceau de lumière vers la surface de sortie ;
- le guide de lumière est réalisé en un bloc monolithique solide et transparent, de préférence en matière plastique.

Selon un mode de réalisation particulier, un feu stop est constitué selon les caractéristiques de la revendication 5.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue schématique en coupe axiale d'un feu de stop réalisé conformément aux enseignements de l'invention ;
- la figure 2 est une vue schématique à plus grande échelle du principe de fonctionnement d'un feu stop selon l'invention ;
- la figure 3 est une vue schématique à plus grande échelle de la surface de sortie du guide de lumière selon la figure 2 ; et
- la figure 4 est une vue schématique à plus grande échelle de la surface de renvoi du guide de lumière.

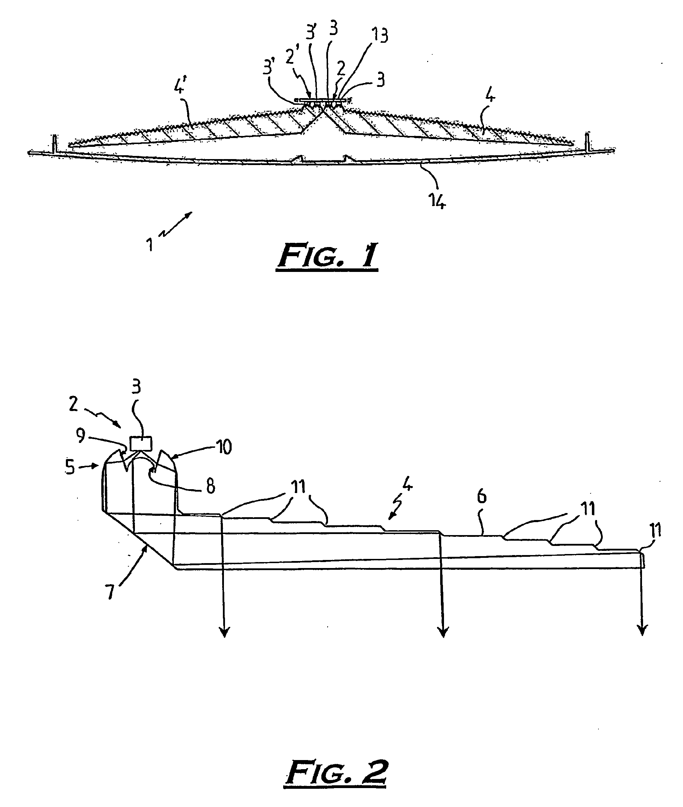

On a représenté à la figure 2 un feu arrière, en particulier un feu stop 1 surélevé pour véhicule automobile.

Selon la présente invention, ce feu stop 1 comporte au moins une source lumineuse primaire 2 constituée d'au moins une diode à luminescence 3 associée à un guide de lumière 4 dont la forme est constituée globalement d'un tronçon rectiligne et comporte une surface d'entrée 5, une surface de sortie 6 formant un bandeau d'éclairage rectiligne et entre la surface d'entrée 5 et la surface de sortie 6 une surface de renvoi d'angle 7 permettant d'agencer les surfaces d'entrée 5 et de sortie 6 dans des plans parallèles.

Il convient de noter que le guide de lumière 4 est un bloc monolithique solide et transparent, par exemple en matière plastique.

Comme visible sur la figure 2, la surface d'entrée 3 du guide de lumière est avantageusement constituée par l'association de deux lentilles optiques ; respectivement une première lentille 8 dite de réfraction insérée dans un cône d'entrée 9 des rayons de lumière issus de la source de lumière primaire 2 permettant de réorienter ces rayons de lumière en un faisceau parallèle et une seconde lentille 10 dite de réflexion disposée coaxialement dans le même plan que la première lentille 8 permettant de réorienter parallèlement les faisceaux de lumière ne traversant pas la première lentille 8 et ceux réfléchis sur la surface de la première lentille offrant ainsi une récupération optimale du faisceau de lumière.

On notera que l'angle du cône d'entrée 9 est conformé de manière à assurer un démoulage du guide d'onde 4 adéquate.

L'ensemble de ce faisceau de lumière réorienté provenant de l'entrée 5 du guide de lumière 4 est dirigé selon une direction sensiblement perpendiculaire par l'intermédiaire de la surface de renvoi d'angle 7 formant une lentille de réflexion interne vers la surface de sortie 6.

Cette surface de sortie 6 de lumière est composée d'une pluralité de facettes de réflexion 11 dont le nombre est calculé pour diriger la lumière comme l'exigent les caractéristiques du feu stop.

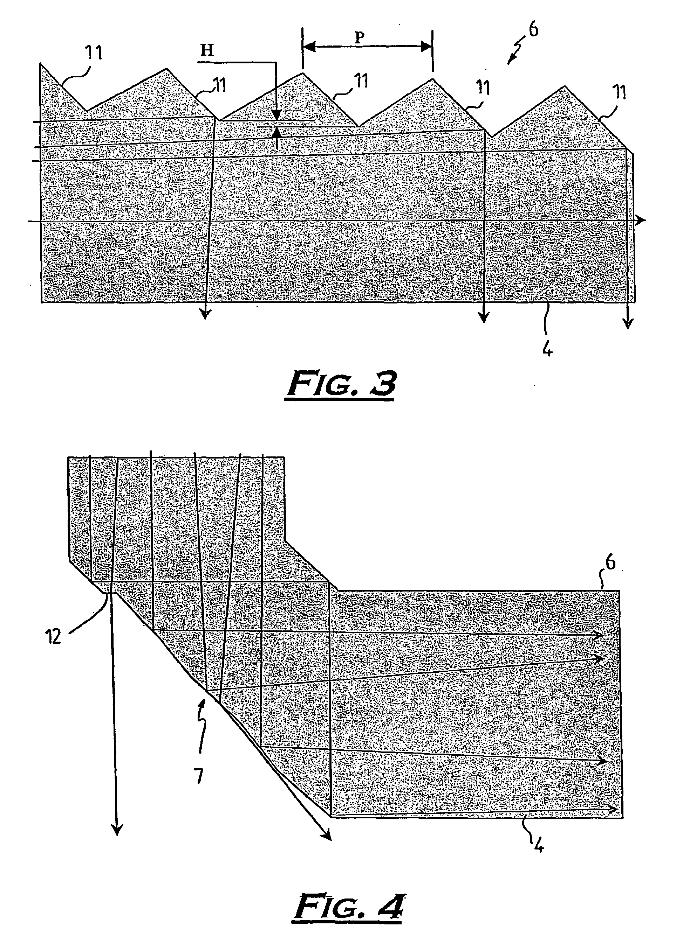

Afin que le bandeau d'éclairage conserve une intensité lumineuse homogène sur toute sa surface, les facettes de réflexion 11 sont agencées selon un pas P, définissant l'espacement des zones éclairées et ont respectivement une hauteur H qui va influencer la quantité de lumière arrivant sur la facette 11. On notera que cette hauteur H de facette 11 augmente en fonction de l'éloignement de la facette 11 par rapport à la source, comme visible à la figure 3.

En outre, afin d'éviter la création d'une zone sombre par rapport au reste du feu au niveau de la surface de renvoi d'angle 7 qui ne laisse s'échapper que peu de rayons, il est avantageusement agencé sur cette surface de renvoi 7 des facettes de sortie 12 de lumière, comme visibles sur la figure 4. Le nombre de facettes de sortie 12 dépend du pas P des facettes de réflexion 11 afin de conserver une intensité lumineuse homogène.

Selon un mode de réalisation particulier de la présente invention représenté à la figure 1, à titre non limitatif, le feu stop 1 est constitué de deux sources de lumière primaires 2 et 2' constituées chacune d'une paire de diodes LED 3, 3' regroupées sur une plaquette à circuit imprimé 13 implantée au centre du feu stop 1 et de deux guides de lumière, respectivement gauche 4' et droite 4 associés à une source primaire 2' et 2 et d'un transparent 14 pourvu de manière classique de stries ou de billes (non visibles) déterminant l'angle de diffusion de la lumière.

Il peut être avantageux d'agencer sur le transparent 14 des facettes permettant de récupérer une partie des rayons s'échappant de la surface de renvoi d'angle 7.

Comme on peut le voir sur cette figure 2, les diodes 3, 3' d'une même source lumineuse primaire 2, 2' sont, selon ce mode de réalisation, disposées à l'entrée du guide d'onde 4 dans sa longueur. Toutefois, selon une variante de réalisation on comprend qu'il est possible de disposer les diodes d'une même source lumineuse primaire selon la largeur de la surface d'entrée sans modifier le principe de fonctionnement, seul l'aspect esthétique extérieur en sera modifié.

On comprend à la lecture de la description ci-dessus que le feu stop de la présente invention est relativement simple à réaliser et permet une économie de réalisation par rapport aux solutions de l'état de la technique en limitant le nombre de diodes utilisées et par conséquent la taille de la plaquette à circuit imprimé. En outre, un tel feu stop offre l'avantage de consommer moins d'énergie et s'avère plus fiable que les solutions de l'art antérieur.

Bien que l'invention ait été décrite en liaison avec un mode de réalisation particulier, elle comprend tous les équivalents techniques définis par les revendications annexées.

## Revendications

1. Feu arrière, en particulier un feu stop pour véhicule automobile comportant au moins une source lumineuse primaire (2 ; 2') constituée d'au moins une diode à luminescence (3 ; 3') associée à un guide de lumière (4 ; 4') dont la forme est constituée globalement d'un tronçon rectiligne et comporte une surface d'entrée (5), une surface de sortie (6) formant un bandeau d'éclairage rectiligne et entre la surface d'entrée (5) et la surface de sortie (6) une surface de renvoi d'angle (7) permettant d'agencer les surfaces d'entrée (5) et de sortie (6) dans des plans parallèles, **caractérisé en ce que** la surface d'entrée (5) du guide de lumière (4) est constituée par l'association de deux lentilles optiques; respectivement une première lentille (8) dite de réfraction insérée dans un cône d'entrée (9) des rayons de lumière issus de la source de lumière primaire (2) permettant de réorienter ces rayons de lumière en un faisceau parallèle et une seconde lentille (10) dite de réflexion disposée coaxialement dans le même plan que la première lentille (8) permettant de réorienter parallèlement les faisceaux de lumière ne traversant pas la première lentille et ceux réfléchis sur la surface de la première lentille, et **en ce que** la surface de renvoi d'angle (7) est munie de facettes de sortie (12) de lumière.

2. Feu arrière selon la revendication 1 ou 2, **caractérisé en ce que** la surface de sortie (6) de lumière est composée d'une pluralité de facettes de réflexion (11) et **en ce que** les facettes de réflexion (11) sont agencées selon un pas (P), définissant l'espacement des zones éclairées et ont respectivement une hauteur (H) croissante en fonction de l'éloignement de la facette (11) par rapport à la source de lumière (2).

3. Feu arrière selon l'une quelconque des revendications précédentes, **caractérisé en ce que** la surface de renvoi d'angle (7) est constituée d'une lentille de réflexion interne agencée de telle manière à rediriger le faisceau de lumière vers la surface de sortie (6).

4. Feu arrière selon l'une quelconque des revendications précédentes, **caractérisé en ce que** le guide de lumière (4) est réalisé en un bloc monolithique solide et transparent, de préférence en matière plastique.

5. Feu stop, **caractérisé en ce qu'**il est constitué de deux feux arrières selon l'une des revendications 1 à 4 avec deux guides de lumière, respectivement gauche (4') et droite (4), chacun associé à une source primaire (2' et 2) regroupée sur une plaquette implantée au centre du feu stop ; et d'un transparent (14) pourvu de stries ou de billes déterminant l'angle de diffusion de la lumière.

## Claims

1. Rear light, in particular a brake light for a motor vehicle comprising at least one primary light source (2; 2') formed by at least one light-emitting diode (3; 3') associated with a light guide (4; 4'), the overall shape of which is defined by a straight section and comprises an input surface (5), an output surface (6) which forms a straight illuminating strip and between the input surface (5) and the output surface (6) a beam-bending surface (7) which allows the input surfaces (5) and output surfaces (6) to be arranged in parallel planes, **characterised in that** the input surface (5) of the light guide (4) is formed by the association of two optical lenses, respectively a first refraction lens (8) which is inserted into an input cone (9) of light rays coming from the primary light source (2) which makes it possible to reorient the rays of light into a parallel beam, and a second reflection lens (10) arranged coaxially in the same plane as the first lens (8) which makes it possible to reorient in parallel the light beams that do not traverse the first lens and those reflected on the surface of the first lens, and **in that** the beam-bending surface (7) is provided with light output facets (12).

2. Rear light according to claim 1, **characterised in that** the light output surface (6) is composed of a plurality of reflective facets (11) and **in that** the reflective facets (11) are arranged at a pitch (P) for defining the spacings between illuminated zones and respectively have a height (H) that increases as a function of the remoteness of a facet (11) from the light source (2).

3. Rear light according to any one of the preceding claims, **characterised in that** the beam-bending surface (7) is formed by an internally arranged reflection lens positioned to redirect the beam of light towards the output surface (6).

4. Rear light according to any one of the preceding claims, **characterised in that** the light guide (4) is designed as a solid and transparent monolithic block, preferably made from a plastic material.

5. Brake light, **characterised in that** it consists of two rear lights according to any one of claims 1 to 4 with two light guides, left (4') and right (4) respectively, each one associated with a primary source (2' and 2) grouped together on a circuit board positioned at the centre of the brake light; and a transparent cover (14) provided with striations or beads for determining the diffusion angle of the light.

## Patentansprüche

1. Heckleuchte, insbesondere Bremsleuchte für ein Kraftfahrzeug, welche mindestens eine Primärlichtquelle (2; 2') aufweist, die aus mindestens einer Leuchtdiode (3; 3') besteht, die einer Lichtführung (4; 4') zugeordnet ist, deren Form im Wesentlichen aus einem geradlinigen Abschnitt besteht und die eine Eintrittsfläche (5), eine Austrittsfläche (6), die einen geradlinigen Leuchtstreifen bildet, und zwischen der Eintrittsfläche (5) und der Austrittsfläche (6) eine Umlenkfläche (7) hat, die es ermöglicht, die Eintrittsfläche (5) und die Austrittsfläche (6) in parallelen Ebenen anzuordnen, **dadurch gekennzeichnet, dass** die Eintrittsfläche (5) der Lichtführung (4) aus der Vereinigung von zwei optischen Linsen besteht; nämlich einer ersten, Brechungslinse genannten Linse (8), die in einen Eintrittskegel (9) der von der Primärlichtquelle (2) ausgehenden Lichtstrahlen eingesetzt ist und es ermöglicht, diese Lichtstrahlen in ein paralleles Bündel auszurichten, und einer zweiten, Reflexionslinse genannten Linse (10), die koaxial in derselben Ebene wie die erste Linse (8) angeordnet ist und es ermöglicht, die Lichtbündel, welche die erste Linse nicht durchqueren, und diejenigen, die an der Oberfläche der ersten Linse reflektiert werden, parallel auszurichten, und **dadurch**, dass die Umlenkfläche (7) mit Lichtaustrittsfacetten (12) ausgestattet ist.

2. Heckleuchte nach Anspruch 1 oder 2, **dadurch gekennzeichnet, dass** die Lichtaustrittsfläche (6) aus mehreren Reflexionsfacetten (11) besteht, und **dadurch**, dass die Reflexionsfacetten (11) mit einer Schrittweite (P) angeordnet sind, die den Abstand der beleuchteten Bereiche definiert, und jeweils eine Höhe (H) aufweisen, die in Abhängigkeit von der Entfernung der Facette (11) bezüglich der Lichtquelle (2) zunimmt.

3. Heckleuchte nach einem der vorhergehenden Ansprüche, **dadurch gekennzeichnet, dass** die Umlenkfläche (7) von einer Linse mit Innenreflexion gebildet wird, die derart angeordnet ist, dass sie das Lichtbündel zu der Austrittsfläche (6) umlenkt.

4. Heckleuchte nach einem der vorhergehenden Ansprüche, **dadurch gekennzeichnet, dass** die Lichtführung (4) in Form eines massiven und durchsichtigen monolithischen Blockes hergestellt ist, vorzugsweise aus Kunststoff.

5. Bremslauchte, **dadurch gekennzeichnet, dass** sie aus zwei Heckleuchten nach einem der Ansprüche 1 bis 4 besteht, mit zwei Lichtführungen, nämlich einer linken (4') und einer rechten (4), wobei jede mit jeweils einer Primärlichtquelle (2' und 2) verbunden ist, die auf einer in der Mitte der Heckleuchte eingesetzten Platte angeordnet sind, und mit einer Scheibe (14), die Riefen oder Schwellen aufweist, die den Winkel der Lichtstreuung bestimmen.
